# EUROPEAN PATENT APPLICATION

(11) **EP 4 434 952 A1**
(43) Date of publication of application: **25.09.2024**
(21) Application number: 23163859.4
(22) Date of filing: 23.03.2023
(51) Int. Cl.: C04B 35/19, C04B 35/16, C04B 35/622, C04B 35/63, C09D 1/02, C09D 5/08, C09D 7/61, C23C 24/08

(54) **COATING COMPOSITION**

(71) Applicant: SCG Chemicals Public Company Limited, 10800 Bangkok (TH); The Siam Refractory Industry Co., Ltd, Bangkok, 10800 (TH)
(72) Inventor: Thongrod, Konokon, 18270 Saraburi (TH); Juthapakdeeprasert, Jindaporn, 18270 Saraburi (TH); Prasertphol, Thanapong, 18270 Saraburi (TH); Chatikanon, Nuttariya, 18270 Saraburi (TH); Tuaprakone, Teewin, 18270 Saraburi (TH); Jitputti, Jaturong, 10161 Bangkok (TH); Tiyapiboonchaiya, Churat, 20110 Chonburi (TH)
(74) Representative: Marks & Clerk LLP

(57) **Abstract**

The present invention provides a coating composition, preferably a corrosion-resistant coating composition, and more preferably a corrosion-resistant and high emissivity coating composition, comprising:
(i) a carbide compound selected from tungsten carbide, silicon carbide titanium carbide, zirconium carbide, hafnium carbide, vanadium carbide, or a mixture thereof;
(ii) a boride compound selected from zirconium diboride, titanium diboride, hafnium diboride, vanadium diboride, or a mixture thereof;
(iii) a nitride compound selected from boron nitride, aluminum nitride, silicon nitride, lithium nitride, sodium nitride, potassium nitride, or a mixture thereof;
(iv) an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) a binder comprising lithium silicate and potassium silicate;
(vi) a fluxing agent comprising an alkali metal feldspar; and
(viii) optionally, media, preferably water,
wherein the weight ratio of lithium silicate to potassium silicate is preferably in the range 0.5 to 6.5 : 1, preferably 1.0 to 3.0 : 1, more preferably 1.2 to 2.5 : 1, and still more preferably 1.4 to 2.0 : 1.

## Description

### FIELD OF THE INVENTION

The present invention relates to a coating composition (e.g. corrosion-resistant and high emissivity coating composition), a method for coating substrates with the composition, and to a substrate coated with the composition.

### BACKGROUND OF THE INVENTION

Industrial heating systems e.g. boilers, furnaces, fired heaters, etc. suffer from corrosion problems within the combustion zone.

Corrosion problems are commonly caused by oxidation of a metal surface of the industrial heating system by several types of active gases (e.g. oxygen, sulphur, etc.) present in the surrounding atmospheric gases, and by the effects of high temperature.

These problems have a significant impact on industry. Not only do large amounts of money need to be spent on maintenance (e.g. by repairing parts or providing replacement parts), there is also an opportunity loss whilst the industrial heating system is shut down for repair.

In addition, industries that use heating systems heavily consume fuel, which causes higher production costs and environmental impact. There is a desire to improve furnace and heater efficiency, to reduce fuel consumption, and the emissions therefrom.

CN109486414A discloses anti-coking and anti-slagging coating material comprising 30-50% of high-temperature-resistant binder, 5-40% of lubricating nonstick material, 5-30% of heat-resistant filler, 0.5-5% of auxiliaries and 0-50% of dispersion medium.

CN109943117A discloses an antioxidant ceramic coating comprising 20-60% of a binder, 0.1-2%% of a binder modifier, 10-40% of agranular ceramic filler and 5-30% of a lamellar filler, wherein the binder modifier is at least one of ZnO, MgO and CaO, and the binder comprises a silicate binder.

CN103771883A discloses a nano anti-carburizing coating comprising alumina 30-50 parts by weight, chromium oxide 3-20 parts by weight, silica 10-30 parts by weight, silicon carbide 1-10 parts by weight, potassium feldspar 0.5-10 parts by weight, bentonite 1-5 parts by weight, talc 0.1-8 parts by weight, sodium silicate 0.1-8 parts by weight, xanthan gum 0.1-8 parts by weight, liquid potassium silicate 30-50 parts by weight, liquid lithium silicate 5-30 parts by weight.

US6358618B1 discloses a protective coating on metal comprising an iron alloy having an adherent coating on at least a portion of its surface. The coating comprises a glass-ceramic having leucite as its principal crystal phase.

### SUMMARY OF THE INVENTION

Viewed from a first aspect, the present invention provides a coating composition, preferably a corrosion-resistant coating composition, and more preferably a corrosion-resistant and high emissivity coating composition, comprising:
(i) a carbide compound selected from tungsten carbide, silicon carbide titanium carbide, zirconium carbide, hafnium carbide, vanadium carbide, or a mixture thereof;
(ii) a boride compound selected from zirconium diboride, titanium diboride, hafnium diboride, vanadium diboride, or a mixture thereof;
(iii) a nitride compound selected from boron nitride, aluminum nitride, silicon nitride, lithium nitride, sodium nitride, potassium nitride, or a mixture thereof;
(iv) an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) a binder comprising lithium silicate and potassium silicate;
(vi) a fluxing agent comprising an alkali metal feldspar; and
(vi) optionally, media, preferably water,
wherein a weight ratio of lithium silicate to potassium silicate is in the range 0.5 to 6.5 : 1, preferably 1.0 to 3.0 : 1, more preferably 1.2 to 2.5 : 1, and still more preferably 1.4 to 2.0 : 1.

Viewed from a further aspect, the present invention provides a container containing a coating composition as hereinbefore described.

Viewed from a further aspect, the present invention provides a method for preparing a coating composition as hereinbefore described comprising:
(i) preparing a mixture of a carbide compound, a boride compound, a nitride compound, an oxide compound and a fluxing agent; and
(ii) mixing said mixture with a binder, and optionally media, preferably water.

Viewed from a further aspect, the present invention provides a method for preparing a coated substrate, comprising the steps of:
(i) providing a substrate; and
(ii) applying a coating composition as hereinbefore described onto at least one surface of said substrate.

Viewed from a further aspect, the present invention provides a coated substrate obtainable by or obtained by the method as hereinbefore described.

Viewed from a further aspect, the present invention provides a coated substrate comprising a coating composition as hereinbefore described.

Viewed from a further aspect, the present invention provides a heating system (e.g. a boiler, fired heater or furnace) comprising a coated substrate as hereinbefore described.

Viewed from a further aspect, the present invention provides the use of a coating composition as hereinbefore described to coat a substrate.

### DEFINITIONS

As used herein, the term "binder" refers to a material or substance that holds or draws other materials together.

As used herein, the term "fluxing agent" refers to a substance that lowers the melting temperature of the coating composition.

As used herein, the term "feldspar" refers to an aluminosilicate mineral that contains a metal. As used herein, the term "alkali metal feldspar" refers to an aluminosilicate mineral that contains an alkali metal, preferably sodium or potassium.

As used herein, the term "room temperature" refers to temperatures in the range 20 to 35 °C, and more preferably 30 °C.

As used herein, the term "wt%" is based on the total weight of the composition, unless otherwise specified.

As used herein, the term "weight ratio" refers to the ratios of the solid weights of the specified components. Thus, if a component is present in the composition as a solution (e.g. as an aqueous solution), any weight ratio including this component refers to the weight of the solid component present in that solution, not the weight of the solution.

As used herein, a weight ratio of A:B:C which is specified as (a1 to a2) : (b1 to b2) : (c1 to c2), means that the value of A in the ratio can range from a1 to a2, that the value of B in the ratio can range from b1 to b2, and that the value of C in the ratio can range from c1 to c2.

As used herein, the term "emissivity" refers to the effectiveness of a material to emit energy as thermal radiation. Emissivity may be defined as the ratio of energy radiated by a particular material to energy radiated by a blackbody at the same temperature.

### DETAILED DESCRIPTION OF THE INVENTION

The present invention provides a coating composition, preferably a corrosion-resistant coating composition, and more preferably a corrosion-resistant and high emissivity coating composition, comprising:
(i) a carbide compound selected from tungsten carbide, silicon carbide titanium carbide, zirconium carbide, hafnium carbide, vanadium carbide, or a mixture thereof;
(ii) a boride compound selected from zirconium diboride, titanium diboride, hafnium diboride, vanadium diboride, or a mixture thereof;
(iii) a nitride compound selected from boron nitride, aluminum nitride, silicon nitride, lithium nitride, sodium nitride, potassium nitride, or a mixture thereof;
(iv) an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) a binder comprising lithium silicate and potassium silicate;
(vi) a fluxing agent comprising an alkali metal feldspar, preferably potassium feldspar; and
(vii) optionally, media, preferably water,
wherein the weight ratio of lithium silicate to potassium silicate is preferably in the range 0.5 to 6.5 : 1, preferably 1.0 to 3.0 : 1, more preferably 1.2 to 2.5 : 1, and still more preferably 1.4 to 2.0 : 1.

Preferred coating compositions of the present invention comprise:
(i) 0.1 -10 wt%, preferably 1 - 5 wt%, more preferably 2-5 wt% of a carbide compound selected from tungsten carbide, silicon carbide titanium carbide, zirconium carbide, hafnium carbide, vanadium carbide, or a mixture thereof;
(ii) 0.1 -15 wt%, preferably 1 - 10 wt%, more preferably 3-7 wt% of a boride compound selected from zirconium diboride, titanium diboride, hafnium diboride, vanadium diboride, or a mixture thereof;
(iii) 0.1 - 15 wt%, preferably 1-10 wt%, more preferably 3 - 7 wt% of a nitride compound selected from boron nitride, aluminum nitride, silicon nitride, lithium nitride, sodium nitride, potassium nitride, or a mixture thereof;
(iv) 5 - 50 wt%, preferably 20 - 40 wt%, more preferably 30 - 40 wt% of an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) 2 - 25 wt%, preferably 5-15 wt%, more preferably 10 - 15 wt% of a binder comprising lithium silicate and potassium silicate;
(vi) 0.5 -10 wt%, preferably 1 - 6 wt%, more preferably 3-5 wt% of a fluxing agent comprising an alkali metal feldspar, preferably potassium feldspar; and
(vii) 25 - 50 wt%, preferably 30 - 40 wt% of water,
wherein wt% are based on the total weight of the coating composition.

The present invention also relates to a coating composition comprising:
(i) 0.1 -10 wt%, preferably 1 - 5 wt%, more preferably 2-5 wt% of a carbide compound selected from tungsten carbide, silicon carbide titanium carbide, zirconium carbide, hafnium carbide, vanadium carbide, or a mixture thereof;
(ii) 0.1 -15 wt%, preferably 1 - 10 wt%, more preferably 3 - 7 wt% of a boride compound selected from zirconium diboride, titanium diboride, hafnium diboride, vanadium diboride, or a mixture thereof;
(iii) 0.1 - 15 wt%, preferably 1-10 wt%, more preferably 3 - 7 wt% of a nitride compound selected from boron nitride, aluminum nitride, silicon nitride, lithium nitride, sodium nitride, potassium nitride, or a mixture thereof;
(iv) 5 - 50 wt%, preferably 20 - 40 wt%, more preferably 30 - 40 wt% of an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) 2 - 25 wt%, preferably 5-15 wt%, more preferably 10 - 15 wt% of a binder comprising lithium silicate and potassium silicate;
(vi) 0.5 - 10 wt%, preferably 1 - 6 wt%, more preferably 3-5 wt% of a fluxing agent comprising an alkali metal feldspar, preferably potassium feldspar; and
(vii) 25 - 50 wt%, preferably 30 - 40 wt% of water,
wherein wt% are based on the total weight of the coating composition.

The coating composition of the present invention advantageously provides coatings with a range of desirable properties, including high strength and durability, resistance to water and moisture absorption and good adhesion to substrate, particularly metal substrate. Additionally the coatings obtained from the coating compositions of the present invention can withstand corrosive conditions at high temperatures. They also possess high emissivity at high temperatures (up to 1400 °C) over a wide range of 400 - 2,000 cm⁻¹.

These properties make the coating compositions of the present invention particularly suitable for coating the surface of substrates, especially metal surfaces, present in heating systems, e.g. on substrates present in boilers, fired heaters or furnaces in order to ensure they perform efficiently and have a prolonged lifetime.

Without wishing to be bound by theory, it is thought that the application of the coating compositions of the present invention to the surface of a metal substrate (e.g. a boiler tube) results in the active metal surface being protected by an inert, ceramic surface, which not only prevents initial slagging formation and thereby reduces the slag deposition rate, but also provides a protective barrier for the underlying substrate and therefore provides corrosion resistance. The ceramic nature of the applied coating is believed to be a result of the weight ratio of the specific components present in the composition.

In preferred coating compositions of the present invention, the weight ratio of lithium silicate to potassium silicate is in the range 0.5 to 2.5 : 1, preferably 0.5 to 1.5 : 1, and more preferably 0.7 to 1.4 : 1.

In preferred coating compositions of the present invention, the weight ratio of lithium silicate to potassium silicate to alkali feldspar, preferably potassium feldspar, is in the range (0.2 to 4) : (0.1 to 3) : 1, preferably (0.3 to 3.5) : (0.2 to 2.5) : 1, more preferably (0.8 to 3.5) : (0.3 to 2.5) : 1, even more preferably (1.2 to 2.2) : (0.7 to 1.2) : 1, yet more more preferably (1.4 to 2.2) : (0.8 to 1.2) : 1, and most preferably (1.8 to 2.2) : (0.8 to 1.2) : 1. In further preferred coating compositions of the present invention, the weight ratio of lithium silicate to potassium silicate to alkali feldspar, preferably potassium feldspar, is in the range (0.2 to 1.8) : (0.2 to 1.3) : 1, more preferably (0.5 to 1.4) : (0.2 to 0.85) : 1, and still more preferably (0.5 to 1.0) : (0.5 to 1.0) : 1.

In further preferred coating compositions of the present invention, the weight ratio of lithium silicate to potassium silicate to alkali feldspar, preferably potassium feldspar, is in the range (1.7 to 5.0) : (0.4 to 1.7) : 1, and more preferably (2.0 to 3.5) : (1.2 to 1.7) : 1.

In preferred coating compositions of the present invention, the fluxing agent comprising alkali metal feldspar comprises, e.g. consists of, potassium feldspar, sodium feldspar, lithium feldspar, rubidium feldspar, cesium feldspar, or a mixture thereof. In more preferred compositions of the present invention, fluxing agent comprising alkali metal feldspar is selected from potassium feldspar, sodium feldspar, or a mixture thereof. More preferably, the fluxing agent comprising alkali metal feldspar is potassium feldspar.

Optionally the coating composition, preferably the binder, of the present invention, further comprises sodium silicate, rubidium silicate, cesium silicate, francium silicate, or a mixture thereof.

In preferred coating compositions of the present invention, the amount of sodium silicate is 0 to 13 wt%, preferably 0 to 10 wt%, more preferably 0 to 5 wt%, still more preferably 0 to 3 wt%, even more preferably 0 to 1 wt%, and yet more preferably 0 to 0.5 wt% based on the total weight of the composition. Still more preferably the amount of sodium silicate present in the coating composition of the present invention is 0 wt%. As described in the examples section, by minimizing or eliminating sodium silicate, the water and moisture resistance of coatings formed from the coating composition is improved.

In preferred coating compositions of the present invention, the carbide compound is tungsten carbide.

In preferred coating compositions of the present invention, the boride compound is zirconium diboride.

In preferred coating compositions of the present invention, the nitride compound is boron nitride.

In preferred coating compositions of the present invention, the oxide compound is a mixture of silicon oxide, chromium oxide and aluminum oxide.

In preferred coating compositions of the present invention, the chromium oxide is selected from CrO, Cr₂O₃, CrO₂, CrOs, CrOs and mixtures thereof, preferably Cr₂O₃.

In some preferred coating compositions of the present invention, the composition further comprises a carbide compound selected from niobium carbide, tantalum carbide, chromium carbide, molybdenum carbide or a mixture thereof.

In some preferred coating compositions of the present invention, the composition further comprises a boride compound selected from niobium boride, niobium diboride, tantalum boride, tantalum diboride, chromium diboride, molybdenum boride, tungsten boride, iron boride, diiron boride, cobalt boride, dicobalt boride, nickel boride, dinickel boride, lanthanum hexaboride, uranium diboride, uranium tetraboride or a mixture thereof.

In some preferred coating compositions of the present invention, the composition further comprises a nitride compound selected from beryllium nitride (Be₃N₂), magnesium nitride (Mg₃N₂), calcium nitride (Ca₃N₂), strontium nitride (Sr₃N₂), gallium nitride, indium nitride, zirconium nitride, tungsten nitride, vanadium nitride, tantalum nitride, niobium nitride, titanium nitride, iron nitride, silver nitride, mercury nitride, copper nitride, zinc nitride, silver nitride or a mixture thereof.

A preferred coating composition of the present invention comprises 0.1 -10 wt%, preferably 1 - 5 wt%, and more preferably 2 - 5 wt% of a carbide compound, preferably tungsten carbide (WC), based on the total weight of the composition.

A preferred coating composition of the present invention comprises 0.1 -15 wt%, preferably 1 - 10 wt%, and more preferably 3 - 7 wt% of a boride compound, preferably zirconium diboride (ZrB₂), based on the total weight of the composition.

A preferred coating composition of the present invention comprises 0.1 -15 wt%, preferably 1 - 10 wt%, and more preferably 3 - 7 wt% of a nitride compound, preferably boron nitride (BN), based on the total weight of the composition.

A preferred coating composition of the present invention comprises 0.1 - 20 wt%, preferably 1-15 wt%, and more preferably 5 - 10 wt% of silicon oxide (SiO₂), based on the total weight of the composition.

A preferred coating composition of the present invention comprises 0.1 -20 wt%, preferably 1-15 wt%, and more preferably 8-15 wt% of chromium oxide (Cr₂O₃), based on the total weight of the composition.

A preferred coating composition of the present invention comprises 1 - 30 wt%, preferably 10 - 25 wt%, and more preferably 12 - 20 wt% of aluminum oxide (Al₂O₃), based on the total weight of the composition.

A preferred coating composition of the present invention comprises 0.1 -20 wt%, preferably 1-15 wt%, and more preferably 5-10 wt% of silicon oxide (SiO₂), 0.1 - 20 wt%, preferably 1 - 15 wt%, and more preferably 8 - 15 wt% of chromium oxide (Cr₂O₃) and 1-30 wt%, preferably 10 - 25 wt%, and more preferably 12 - 20 wt% of aluminum oxide (Al₂O₃), based on the total weight of the composition.

A preferred coating composition of the present invention comprises 5 to 25 wt%, preferably 8 to 20 wt%, more preferably 8 to 15 wt% of aqueous potassium silicate solution, based on the total weight of the composition.

A preferred coating composition of the present invention comprises 5 to 55 wt%, preferably 10 to 45 wt%, more preferably 30 to 40 wt% of aqueous lithium silicate solution, based on the total weight of the composition.

A preferred coating composition of the present invention comprises 1 to 7 wt%, preferably 2 to 6 wt%, even more preferably 3 to 5 wt% of potassium feldspar, based on the total weight of the composition.

A preferred coating composition of the present invention comprises 5 to 35 wt%, more preferably 5 to 25 wt%, even more preferably 5 to 20 wt%, even more preferably 8 to 20 wt%, even more preferably 8 to 15 wt%, even more preferably 10 to 15 wt% aqueous potassium silicate solution based upon the total weight of composition.

A preferred compositions of the present invention comprise 5 to 55 wt%, preferably 10 to 50 wt%, more preferably 10 to 45 wt%, even more preferably 20 to 40 wt%, even more preferably 30 to 40 wt% aqueous lithium silicate solution based upon the total weight of composition.

In preferred coating compositions of the present invention, the weight ratio of the mixture of binder and fluxing agent, preferably a mixture of lithium silicate, potassium silicate, and potassium feldspar, to carbide compound, preferably tungsten carbide, is 1.0 to 10.0 : 1, preferably 3.0 to 7.5 : 1, more preferably 4.5 to 7.0 : 1, and most preferably 5.0 to 6.5 : 1.

In alternative preferred coating compositions of the present invention, the weight ratio of the mixture of binder and fluxing agent, preferably a mixture of lithium silicate, potassium silicate, and potassium feldspar, to carbide compound, preferably tungsten carbide, is 1.0 to 5.0 : 1, preferably 2.0 to 5.0 : 1, and more preferably 3.0 to 5.0 : 1.

In preferred coating compositions of the present invention, the weight ratio of the mixture of binder and fluxing agent, preferably a mixture of lithium silicate, potassium silicate, and potassium feldspar, to boride compound, preferably zirconium diboride, is 0.5 to 7.0 : 1, preferably 1.5 to 4.5 : 1, and more preferably 2.5 to 4.0 : 1.

In alternative preferred coating compositions of the present invention, the weight ratio of the mixture of binder and fluxing agent, preferably a mixture of lithium silicate, potassium silicate, and potassium feldspar, to boride compound, preferably zirconium diboride, is 0.5 to 3.5 : 1, preferably 1.0 to 3.0 : 1, and more preferably 1.5 to 3.0 : 1.

In preferred coating compositions of the present invention, the weight ratio of the mixture of binder and fluxing agent, preferably a mixture of lithium silicate, potassium silicate, and potassium feldspar, to nitride compound, preferably boron nitride, is 0.5 to 7.0 : 1, preferably 1.5 to 4.5 : 1, and more preferably 2.5 to 4.0 : 1.

In alternative preferred coating compositions of the present invention, the weight ratio of the mixture of binder and fluxing agent, preferably a mixture of lithium silicate, potassium silicate, and potassium feldspar, to nitride compound, preferably boron nitride, is 0.5 to 3.5 : 1, preferably 1.0 to 3.0 : 1, and more preferably 1.5 to 3.0 : 1.

In preferred coating compositions of the present invention, the weight ratio of the mixture of binder and fluxing agent, preferably a mixture of lithium silicate, potassium silicate, and potassium feldspar, to oxide compound is 0.1 to 1.5 : 1, preferably 0.1 to 0.8 : 1, more preferably 0.2 to 0.6 : 1, and most preferably 0.4 to 0.55 : 1.

In preferred coating compositions of the present invention, the weight ratio of the mixture of binder and fluxing agent, preferably a mixture of lithium silicate, potassium silicate, and potassium feldspar, to a mixture of silicon oxide, aluminum oxide, and chromium oxide (e.g. Cr₂O₃) is 0.1 to 1.5 : 1, preferably 0.1 to 0.8 : 1, more preferably 0.2 to 0.6 : 1, and most preferably 0.4 to 0.55 : 1.

In preferred coating compositions of the present invention, the weight ratio of carbide compound to boride compound to nitride compound is in the range 0.1 to 1.5 : 0.5 to 2 : 1, preferably 0.2 to 0.9 : 0.6 to 1.5 : 1, and more preferably 0.4 to 0.7 : 0.8 to 1.2 : 1.

In preferred coating compositions of the present invention, the weight ratio of tungsten carbide to zirconium diboride to boron nitride is in the range 0.1 to 1.5 : 0.5 to 2:1, preferably 0.2 to 0.9 : 0.6 to 1.5 : 1, and more preferably 0.4 to 0.7 : 0.8 to 1.2 : 1.

In preferred coating compositions of the present invention, the weight ratio of carbide compound to chromium oxide (e.g. Cr₂O₃) is in the range 0.1 to 1 : 1, preferably 0.1 to 0.5 : 1, and more preferably 0.2 to 0.4 : 1.

In preferred coating compositions of the present invention, the weight ratio of tungsten carbide to chromium oxide (e.g. Cr₂O₃) is in the range 0.1 to 1 : 1, preferably 0.1 to 0.5 : 1, and more preferably 0.2 to 0.4 : 1.

In preferred coating compositions of the present invention, the weight ratio of boride compound to chromium oxide (e.g. Cr₂O₃) is in the range 0.1 to 1, preferably 0.3 to 0.7 : 1, and more preferably 0.4 to 0.6 : 1.

In preferred coating compositions of the present invention, the weight ratio of zirconium diboride to chromium oxide (e.g. Cr₂O₃) is in the range 0.1 to 1, preferably 0.3 to 0.7 : 1, and more preferably 0.4 to 0.6 : 1.

In preferred coating compositions of the present invention, the weight ratio of nitride compound to chromium oxide (e.g. Cr₂O₃) is in the range 0.1 to 1, preferably 0.3 to 0.7 : 1, and more preferably 0.4 to 0.6 : 1.

In preferred coating compositions of the present invention, the weight ratio of boron nitride to chromium oxide (e.g. Cr₂O₃) is in the range 0.1 to 1, preferably 0.3 to 0.7 : 1, and more preferably 0.4 to 0.6 : 1.

In preferred coating compositions of the present invention, the weight ratio of carbide compound to oxide compound, preferably a mixture of silicon oxide, chromium oxide (e.g. Cr₂O₃) and aluminum oxide, is in the range 0.01 to 0.20 : 1, preferably 0.05 to 0.15 : 1, and more preferably 0.05 to 0.10 : 1.

In preferred coating compositions of the present invention, the weight ratio of tungsten carbide to oxide compound, preferably a mixture of silicon oxide, chromium oxide (e.g. Cr₂O₃) and aluminum oxide, is in the range 0.01 to 0.20 : 1, preferably 0.05 to 0.15 : 1, and more preferably 0.05 to 0.10 : 1.

In preferred coating compositions of the present invention, the weight ratio of boride compound to oxide compound, preferably a mixture of silicon oxide, chromium oxide (e.g. Cr₂O₃) and aluminum oxide, is in the range 0.05 to 0.25, preferably 0.10 to 0.20 : 1, and more preferably 0.12 to 0.15 : 1.

In preferred coating compositions of the present invention, the weight ratio of zirconium diboride to oxide compound, preferably a mixture of silicon oxide, chromium oxide (e.g. Cr₂O₃) and aluminum oxide, is in the range 0.05 to 0.25, preferably 0.10 to 0.20 : 1, and more preferably 0.12 to 0.15 : 1.

In preferred coating compositions of the present invention, the weight ratio of nitride compound to oxide compound, preferably a mixture of silicon oxide, chromium oxide (e.g. Cr₂O₃) and aluminum oxide, is in the range 0.05 to 0.25, preferably 0.10 to 0.20 : 1, and more preferably 0.12 to 0.15 : 1.

In preferred coating compositions of the present invention, the weight ratio of boron nitride to oxide compound, preferably a mixture of silicon oxide, chromium oxide (e.g. Cr₂O₃) and aluminum oxide, is in the range 0.05 to 0.25, preferably 0.10 to 0.20 : 1, and more preferably 0.12 to 0.15 : 1.

Preferred coating compositions of the present invention comprise 2 to 25 wt%, more preferably 5 to 15 wt%, still more preferably 8 to 15 wt%, and even more preferably 10 to 15 wt% solid binder based upon the total weight of composition.

Alternative preferred coating compositions of the present invention comprise 2 to 10 wt%, and more preferably 5 to 10 wt% solid binder based upon the total weight of composition.

In preferred coating compositions of the present invention, the solid binder consists of potassium silicate and lithium silicate.

In preferred coating compositions of the present invention, the potassium silicate is in the form of an aqueous solution. In preferred coating compositions of the present invention, the potassium silicate is in the form of a 5 to 60 wt% aqueous solution, more preferably a 10 to 50 wt% aqueous solution, and even more preferably a 25 to 50 wt% aqueous solution.

In preferred coating compositions of the present invention, the lithium silicate is in the form of a 5 to 40 wt% aqueous solution, more preferably a 10 to 30 wt% aqueous solution, and even more preferably a 10 to 25 wt% aqueous solution.

Preferred coating compositions of the present invention comprise 5 to 35 wt%, more preferably 5 to 25 wt%, even more preferably 5 to 20 wt%, even more preferably 8 to 20 wt%, even more preferably 8 to 15 wt%, even more preferably 10 to 15 wt% aqueous potassium silicate solution based upon the total weight of composition.

Preferred compositions of the present invention comprise 5 to 55 wt%, preferably 10 to 50 wt%, more preferably 10 to 45 wt%, even more preferably 20 to 40 wt%, even more preferably 30 to 40 wt% aqueous lithium silicate solution based upon the total weight of composition.

Preferred compositions of the present invention comprise 1 to 7 wt%, more preferably 2 to 6 wt%, even more preferably 3 to 5 wt% alkali metal feldspar, preferably potassium feldspar, based upon the total weight of composition.

Preferably, the average particle size of the carbide compound (e.g. tungsten carbide), boride compound (e.g. zirconium diboride), nitride compound (e.g. boron nitride), and oxide compound (e.g. silicon oxide, aluminum oxide, chromium oxide) employed in the coating composition of the present invention is equal to or less than 100 micron, more preferably equal to or less than 65 micron, even more preferably equal to or less than 45 micron, and yet more preferably 0.1 - 45 micron. Preferably the average particle size is measured using a laser particle size analyser.

Preferably, the average particle size of the alkali metal feldspar employed in the coating composition of the present invention is equal to or less than 125 micron, preferably equal to or less than 120 micron, more preferably equal to or less than 115 micron, still more preferably equal to or less than 110 micron, and yet more preferably 70 - 100 micron.

A particularly preferred coating composition of the present invention comprises:
0.1 -10 wt%, preferably 1 - 5 wt%, more preferably 2-5 wt% of tungsten carbide (WC);
0.1 - 15 wt%, preferably 1-10 wt%, more preferably 3 - 7 wt% of zirconium diboride (ZrB₂);
0.1 - 15 wt%, preferably 1-10 wt%, more preferably 3 - 7 wt% of boron nitride (BN);
0.1 - 20 wt%, preferably 1 - 15 wt%, more preferably 5 - 10 wt% of silicon oxide (SiO₂);
0.1 - 20 wt%, preferably 1 - 15 wt%, more preferably 8-15 wt% of chromium oxide (Cr₂O₃);
1 - 30 wt%, preferably 10 - 25 wt%, more preferably 12 - 20 wt% of aluminum oxide (Al₂O₃);
5 to 25 wt%, preferably 8 to 20 wt%, more preferably 8 to 15 wt% of aqueous potassium silicate solution;
5 to 55 wt%, preferably 10 to 45 wt%, more preferably 30 to 40 wt% of aqueous lithium silicate solution; and
1 to 7 wt%, preferably 3 to 5 wt% of potassium feldspar,
wherein each of the specified wt% values are based upon the total weight of the composition.

Preferably, the coating composition of the present invention is an aqueous coating composition. Preferably the coating composition comprises 25 to 50 wt% water and more preferably 30-40 wt% water.

Preferably, the coating composition of the present invention comprises less than 5 wt%, more preferably less than 3 wt%, even more preferably less than 2 wt%, and more preferably less than 1 wt % (e.g. less than 0.5 wt %) of organic solvent.

The present invention also provides a container containing a coating composition as hereinbefore described. Containers of the present invention include drums, bottles, boxes, tins, jars, sachets etc.

The present invention also provides a kit for preparing an aqueous coating composition as hereinbefore described, comprising:
(i) a first container containing a mixture of a carbide compound selected from tungsten carbide, silicon carbide, titanium carbide, zirconium carbide, hafnium carbide, vanadium carbide, or a mixture thereof, a boride compound selected from zirconium diboride, titanium diboride, hafnium diboride, vanadium diboride, or a mixture thereof, a nitride compound selected from boron nitride, aluminum nitride, silicon nitride, lithium nitride, sodium nitride, potassium nitride, or a mixture thereof, an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof, and an alkali metal feldspar; and
(ii) instructions to mix said mixture with aqueous lithium silicate solution and aqueous potassium silicate solution.

Preferred kits further comprise a second container containing said aqueous lithium silicate solution and aqueous potassium silicate solution.

The present invention also provides a method for preparing a coating composition as hereinbefore described. A preferred method comprises the steps of:
(i) preparing a mixture of a carbide compound selected from tungsten carbide, silicon carbide, titanium carbide, zirconium carbide, hafnium carbide, vanadium carbide, or a mixture thereof, a boride compound selected from zirconium diboride, titanium diboride, hafnium diboride, vanadium diboride, or a mixture thereof, a nitride compound selected from boron nitride, aluminum nitride, silicon nitride, lithium nitride, sodium nitride, potassium nitride, or a mixture thereof, an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof, and an alkali metal feldspar; and
(ii) mixing said mixture with a mixture of aqueous lithium silicate solution and aqueous potassium silicate solution.

In preferred methods of the present invention, the step (ii) mixing is at room temperature.

The present invention also provides a method for preparing a coated substrate, comprising the steps of:
(i) providing a substrate; and
(ii) applying a coating composition as hereinbefore defined onto at least one surface of said substrate.

In preferred methods of the present invention, the substrate is metal and/or refractory. Preferably, the substrate is metal. More preferably, the substrate is carbon steel (e.g. carbon steel SS400), stainless steel or alloy.

When the substrate is a refractory, it is preferably a fireclay brick, an insulating firebrick, a plastic refractory or a ceramic fiber.

In preferred methods of the present invention, the substrate is a boiler tube, fire tube, a plug tube, a wall tube, a superheater tube or a coverguard.

In alternative preferred methods of the present invention, the substrate may be an inner lining, structure and/or part of a furnace (e.g. a cracking furnace in a petrochemical plant), a fire heater, preheater, reformer, other refractory equipment in the field, ceramic automotive parts, refractory aerospace parts, or marine parts that are subjected to high temperature when in use.

In preferred methods of the present invention, the substrate, especially metal substrate, has a surface roughness of 2.5 to 5.5 micron, and preferably 3.0 to 5.0 micron (e.g. 4.0 micron) as determined by profilometry.

In preferred methods of the present invention, the coating composition is applied in step (ii) by a method selected from spray coating, brush coating, dip coating or combinations thereof. More preferably, the coating composition is applied in step (ii) by spray coating, even more preferably by air spray coating or airless spray coating.

In preferred methods of the present invention, step (ii) provides a layer of coating composition having a thickness (i.e. a wet thickness) of 100 to 300 microns, more preferably 100 to 200 microns (e.g. 150 microns).

Preferred methods of the present invention further comprise an initial step of preparing the substrate for coating. Preferably, the substrate is prepared for coating by cleaning and/or blasting with sand or garnet.

Preferred methods of the present invention further comprise a drying step that follows step (ii). Preferably, the coated substrate is air-dried at room temperature for 1 to 24 hours, more preferably 1 to 12 hours, even more preferably 1 to 7 hours (e.g. 4 hours). In preferred methods of the present invention, the dried layer of coating composition has a thickness of 50 to 200 microns, more preferably 90 to 180 microns, even more preferably 120 to 150 microns.

Preferred methods of the present invention further comprise a sintering step that follows the drying step. Preferably, the dried coated substrate is sintered for 1 to 10 hours, more preferably 2 to 8 hours, even more preferably 3 to 6 hours (e.g. 5 hours). Preferably, the dried coated substrate is sintered at 500 to 700 °C, more preferably 550 to 650°C, even more preferably 580 to 620°C (e.g. 600°C). Preferably, the dried coated substrate is sintered at a heating rate of 1 to 10 °C/minute, more preferably 2 to 8 °C/minute, even more preferably 3 to 7°C/minute.

The present invention also provides a coated substrate obtainable by or obtained by a method as hereinbefore described.

The present invention also provides a coated substrate comprising a coating composition as hereinbefore described on substrate.

The present invention also provides a coated substrate, wherein said coating comprises:
(i) a carbide compound selected from tungsten carbide, silicon carbide titanium carbide, zirconium carbide, hafnium carbide, vanadium carbide, or a mixture thereof;
(ii) a boride compound selected from zirconium diboride, titanium diboride, hafnium diboride, vanadium diboride, or a mixture thereof;
(iii) a nitride compound selected from boron nitride, aluminum nitride, silicon nitride, lithium nitride, sodium nitride, potassium nitride, or a mixture thereof;
(iv) an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) a binder comprising lithium silicate and potassium silicate;
(vi) a fluxing agent comprising an alkali metal feldspar; and
(vi) optionally, media, preferably water,
wherein the weight ratio of lithium silicate to potassium silicate is preferably in the range 0.5 to 6.5 : 1, preferably 1.0 to 3.0 : 1, more preferably 1.2 to 2.5 : 1, and still more preferably 1.4 to 2.0 : 1.

Preferred coatings are as set out above in relation to the coating compositions. It will be noted that the coatings of the present invention (i.e. the dry coatings after the media and/or solvent has been evaporated away) have the same ratios of components as the coating compositions, because the weight ratios employed in the coating compositions of the present invention refer to the ratios of the solid weights of the specified components.

Preferably, the coated substrate of the present invention is a boiler tube, fire tube, wall tube, superheater tube, coverguard or plug tube. Alternative preferred coated substrates of the present invention include an inner lining, structure and/or part of a furnace (e.g. a cracking furnace in a petrochemical plant), a fire heater, preheater, reformer, other refractory equipment in the field, ceramic automotive parts, refractory aerospace parts, or marine parts that are subjected to high temperature when in use.

The present invention also provides a heating system (e.g. a boiler, fired heater or furnace) comprising a coated substrate as hereinbefore described.

Preferably, the heating system of the present invention is a boiler e.g. utility boiler, fire tube boiler. Another preferred heating system of the present invention is a fired heater e.g. process heater.

The present invention also provides the use of a coating composition as hereinbefore described to coat a substrate.

The present invention also provides the use of a coating composition as hereinbefore described to prevent or reduce corrosion of a substrate and/or slag deposition on a substrate and/or increase emissivity of a substrate.

The coating compositions of the present invention have been demonstrated to have a resistance to water and/or moisture absorption, especially before the coating composition is completely dried (sintered). The coatings formed from the coating compositions of the present invention therefore do not swell and/or come-off from the substrate if it subjected to high humidity conditions or contacted with water.

The coating compositions and coatings of the present invention have been demonstrated to have no cracking when subjected to high temperature corrosive conditions. The coatings of the present invention are therefore corrosion-resistant.

The coating compositions and coatings of the present invention have been demonstrated to have high emissivity.

### BRIEF DESCRIPTION OF THE FIGURES

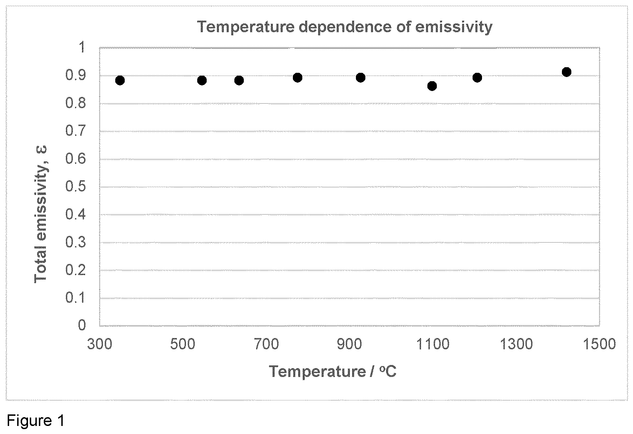

Figure 1 is a graph showing total emissivity versus temperature for coatings of the invention.

### EXAMPLES

### Materials

WC, TiC, BN, SiO₂, Cr₂O₃, Al₂O₃, aqueous solution of lithium silicate, aqueous solution of potassium silicate, aqueous solution of sodium silicate, and potassium feldspar were commercially available from Merck.

ZrB₂ was commercially available from American elements.

### Measurement methods

The coatings of the present invention were tested according to a variety of methods, as outlined below:
- Moisture resistance was evaluated by placing a coated sample in an enclosed moisture-controllable chamber for 24 hours, at 100% relative humidity. Any effects such as color change, blistering, loss of adhesion, softening, etc. are observed and reported.
- Water resistance was evaluated by totally immersing a coated sample in distilled or deionized water in a corrosion-resistant container for 12 hours or 24 hours. Any effects such as color change, blistering, loss of adhesion, softening, etc. are observed and reported.
- Coating adhesion to the substrate was measured according to ASTM-D4541, wherein a dolly comprising a layer of glue is brought into contact with a coated substrate to determine how strongly the coating is attached to the substrate.
- Thermal shock resistance was measured by heating a coated sample up to 800 °C in a furnace, using a heating rate of 8°C/min. The sample was then held at 800 °C for 15 min before being taken out of the furnace and being allowed to cool at room temperature. The sample weight was then measured. This process was repeated for 15 cycles, with the sample weight being measured, and the appearance of the coating being observed, at the end of each cycle.
- High temperature corrosion properties were measured by heating a coated sample up to 800 °C in a furnace at atmospheric pressure over a period of 40 min. The coated sample was left at a temperature of 800°C for 24 h, before being allowed to cool. Any changes (e.g. cracking, peel-off, etc.) of the coated substrate were reported.
- Emissivity was measured across the spectral range of 400 - 2000cm⁻¹ using a system comprised of a computer controlled circular turntable equipped with a blackbody reference and a heating system based on a CO₂ laser. The system combines two spectrometers. The first one is used to obtain emittance spectra in far and mid infrared ranges, while the second one is used to acquire emittance between mid-infrared and visible spectral ranges. The system provides emittance measurements in the spectral range from far infrared up to visible light and across a wide range of temperature. The total emissivity of coatings is computed by integrating the product of the spectral emissivity and the black body energy over the measured entire spectrum.
- Slag resistance was observed by placing a slag pellet on a coated sample and then placing the sample, with the slag pellet in place, inside the furnace with temperature of 800°C for 5 hours. The slag pellet was prepared by grinding slag from biomass-fired power plant into powder then forming round flat pellet with diameter of 13 mm by using 0.5 grams of slag powder.

### Coating preparation method

A 17.5 wt% aqueous solution of lithium silicate, a 37.5 wt% aqueous solution of sodium silicate and a 37.5 wt% aqueous solution of potassium silicate were introduced into a mixing tank at room temperature. WC, TiC, ZrB₂, BN, SiO₂, Cr₂O₃, Al₂O₃, and potassium feldspar were then added to the mixing tank in the amounts shown in Table 1 below. The resultant mixture was stirred at 25 rpm at room temperature for several minutes to obtain the coating compositions. Uniform mixing was evidenced by the absence of residue larger than about 250 microns.

The comparative examples were prepared in an analogous manner.

The coating compositions are further described in Table 1 below. The weight ratios of various components are specified in Table 2.

**Table 1**

| Ingredient | Example 1 (wt %) | Comparative example 1 (wt%) | Comparative example 2 (wt%) |
|---|---|---|---|
| WC | 3.0 | 0 | 5 |
| TiC | 0 | 0 | 6 |
| ZrB₂ | 5.0 | 0 | 0 |
| BN | 5.0 | 0 | 0 |
| SiO₂ | 9.0 | 9.0 | 9.0 |
| Cr₂O₃ | 10.0 | 6.0 | 10.0 |
| Al₂O₃ | 16.5 | 22.0 | 17.0 |
| Potassium feldspar | 4.5 | 4.5 | 5.0 |
| Potassium silicate solution | 11.0 | 31.0 | 11.0 |
| Lithium silicate solution | 36.0 | 0 | 37.0 |
| Sodium silicate solution | 0 | 27.5 | 0 |
| Total | 100 | 100 | 100 |

### Substrate coating method

### • Preparation of samples for testing emissivity

Emissivity was tested using sapphire as the substrate to obtain the intrinsic emissivity of the coating. The sapphire (single crystal of Al₂O3) wafer had a thickness of 0.5 mm +/- 0.05 mm.

The substrate (length 9 mm x width 9 mm x thickness 0.5 mm) was spray coated with the coating composition using an air spray gun. The coated substrate was dried at room temperature (25 °C) overnight (12 hours). The dried coating was calcined at 1200°C for 5 hours (heating rate 1°C/min) in a furnace, and then cooled down to room temperature (25 °C). The final coated substrate was removed from the furnace. The coating thickness was 200 microns.

### • Preparation of a coated substrate for testing moisture resistance, water resistance, adhesion, thermal shock resistance, high temperature corrosion resistance, and slag resistance

The coating compositions were coated onto a carbon steel plate SS400 prior to being tested for water resistance.

The substrate was prepared for coating by cleaning and then blasting with garnet or sand until the substrate had a surface roughness of 30 to 50 micron. The coating composition was then applied directly to the surface of the prepared substrate using a spray gun system at a pressure of 5 bar to a thickness of 300 to 400 micron. The coated substrates were air-dried for 12 hours prior to testing. The dried coating had a thickness of 90 to 120 microns.

### Testing of the Coatings

The coatings were tested according to various tests as described above. The results are shown in Table 2 below and in Figure 1.

**Table 2**

| **Ratio** | **Example 1** | **Comparative Example 1** | **Comparative Example 2** |
|---|---|---|---|
| Weight ratio | 1.53 : 1 | 0:1 | 1.57 : 1 |
| lithium silicate : potassium silicate | | | |
| Weight ratio | 1.40 : 0.92 : 1 | 0 : 2.58 : 1 | 1.30 : 0.83 : 1 |
| lithium silicate : potassium silicate : potassium feldspar | | | |
| Weight ratio: (Binder + fluxing agent) : carbide compound | 5:1 | 26.44 : 0 | 1.419 : 1 |
| Weight ratio: (Binder + fluxing agent): boride compound | 3:1 | 26.44 : 0 | 15.6 : 0 |
| Weight ratio: (Binder + fluxing agent): nitride compound | 3:1 | 26.44 : 0 | 15.6 : 0 |
| Weight ratio | 0.6 : 1 : 1 | 0 : 0 : 0 | 11 : 0 : 0 |
| carbide compound : boride compound : nitride compound | | | |
| Weight ratio (Binder + fluxing agent): (SiO₂ + Cr₂O₃ + Al₂O₃) | 0.42 : 1 | 0.71 : 1 | 0.43 : 1 |
| Weight ratio | 0.3 : 1 | 0:1 | 1.1 : 1 |
| carbide compound : chromium oxide | | | |
| Weight ratio | 0.5 : 1 | 0:1 | 0:1 |
| boride compound : chromium oxide | | | |
| Weight ratio | 0.5 : 1 | 0:1 | 0:1 |
| nitride compound : chromium oxide | | | |

| **Performance testing** | | | |
|---|---|---|---|
| Moisture resistance (24 hours, 100% relative humidity) | Pass (Coatings still be on the substrate) | Fail (Coatings come-off from the substrate > 90%) | Pass (Coatings still be on the substrate) |
| Water resistance (24 hours) | Pass (Coatings still be on the substrate) | Fail (Coatings come-off from the substrate > 90%) | Pass (Coatings still be on the substrate) |
| Adhesion | No peel off | peel off < 5% of testing area | No peel off |
| Thermal shock resistance | > 15 cycles | > 15 cycles | Crack at 12 cycles |
| High temperature corrosion test: | No cracking | No cracking | Cracking around 5% of surface area |
| Slag resistance test (appearance) | No slag deposition on surface | No slag deposition on surface | - |

### • Moisture resistance test

As shown in Table 2 above, the coating of Example 1 showed no change during moisture resistance testing whereas comparative example 1 completely failed and resulted in bare substrate without any coating thereon. This indicates that the coating compositions of the invention provide coatings having good moisture resistance which reduce or prevent coating problems (e.g. sagging, colour change, blistering, come-off, softening) when applied in high humidity conditions.

### • Water resistance test

As shown in Table 2 above, Example 1 showed no change during water resistance testing whereas comparative example 1 completely failed and resulted in substrate without any coating thereon. This indicates that the coating compositions of the invention provide coatings having good water resistance which reduce or prevent coating problems (e.g. sagging, colour change, blistering, come-off, softening) when applied in high humidity conditions.

### • Adhesion test

As shown in Table 2 above, Example 1 showed no peel-off. In comparison, the coating of Comparative Example 1 resulted in slight peeling off. This result shows that the coatings derived from the coating compositions of the present invention are both strong and securely attached to the underlying metal substrate.

### • Thermal shock resistance test

As shown in Table 2 above, Example 1 survived the thermal shock test without breaking or cracking, even after 15 repeated cycles. In comparison, the coating of Comparative Example 2 failed (i.e. the coating cracked) after the twelfth cycle. This result shows that the coating compositions of the invention provide coatings that are able to withstand high temperature conditions (e.g. such as temperatures achieved within a CFB boiler system) for extended periods as well as temperature cycling.

### • High temperature corrosion test

As shown in Table 2 above, the substrates coated with coatings of Example 1 pass the test without showing any cracking, whereas cracking was found in the coatings derived from Comparative Example 2. This result indicates that the coating compositions of the invention provide coatings that are more able to withstand corrosion at high temperatures and to better act as a protective barrier to prevent the underlying metal surface (e.g. a metal boiler pipe) from corroding under these conditions, compared to the comparative composition.

### • Emissivity test

As shown in Figure 1, the coating composition of the invention (Example 1) show high-emissivity at high temperature (up to 1400 °C).

### • Slag test

As shown in Table 2, the substrates coated with coatings of Example 1 pass the test without slag adhering/sticking on coating surface.

### Effect of Binder Composition on Water Resistance

The coating compositions described in Table 3 below were prepared. A 17.5 wt% aqueous solution of lithium silicate and/or a 37.5 wt% aqueous solution of potassium silicate and/or a 37.5 wt% aqueous solution of sodium silicate as required were introduced into a mixing tank at room temperature. SiO₂, Cr₂O₃, Al₂O₃, and potassium feldspar were then added to the mixing tank in the amounts shown in the table below. The resultant mixture was stirred at 25 rpm at room temperature for several minutes to obtain the coating compositions. Uniform mixing was evidenced by the absence of residue larger than about 250 microns.

The comparative examples were made in an analogous manner.

The coating compositions were then coated onto a carbon steel plate SS400 as described above prior to being tested for water resistance. The results of water resistance testing are shown in Table 3 below.

As outlined in Table 3, Examples 2 to 6, which comprise binder consisting of potassium silicate and lithium silicate, and potassium feldspar showed high levels of water resistance and exhibited no change in the test conditions. In contrast, comparative example 3, which contained sodium silicate instead of lithium silicate, exhibited poor moisture resistance, and resulted in bare substrate without coating thereon in the test conditions. Comparative examples 4 and 5 which comprise a weight ratio of lithium silicate to potassium silicate 0.3 : 1 and 0 : 1 respectively showed low levels of water resistance evidencing the importance of the ratio of binder components.

This experiment shows that the composition of the binder is critical in achieving moisture and water resistance. Specifically, coating compositions comprising lithium silicate instead of sodium silicate and comprising lithium silicate and potassium silicate in a particular ratio, have strong water resistance, which reduces or prevents coating problems such as sagging, color change, blistering, come-off, softening, common to high humidity conditions.

**Table 3**

| Composition | Ex. 2 | Ex. 3 | Ex. 4 | Ex. 5 | Ex. 6 | Com. Ex. 3 | Com. Ex. 4 | Com. Ex. 5 |
|---|---|---|---|---|---|---|---|---|
| WC | 3 | 3 | 3 | 3 | 3 | 3 | 3 | 3 |
| ZrB2 | 5 | 5 | 5 | 5 | 5 | 5 | 5 | 5 |
| BN | 5 | 5 | 5 | 5 | 5 | 5 | 5 | 5 |
| SiO₂ | 9 | 9 | 9 | 9 | 9 | 9 | 9 | 9 |
| Cr₂O₃ | 10 | 10 | 10 | 10 | 10 | 10 | 10 | 10 |
| Al₂O₃ | 16.5 | 16.5 | 16.5 | 16.5 | 16.5 | 16.5 | 16.5 | 16.5 |
| Potassium Feldspar | 4.5 | 4.5 | 4.5 | 4.5 | 4.5 | 4.5 | 4.5 | 4.5 |
| Sodium silicate solution | | | | | | 22 | | |
| Potassium silicate solution | 22.69 | 11.75 | 8.89 | 6.32 | 4.01 | 25 | 28.61 | 47 |
| Lithium silicate solution | 24.31 | 35.25 | 38.11 | 40.68 | 42.99 | | 18.39 | |
| Total | 100 | 100 | 100 | 100 | 100 | 100 | 100 | 100 |
| Weight ratio lithium silicate : potassium silicate | 0.5 : 1 | 1.4 : 1 | 2.0 : 1 | 3.0 : 1 | 5.0 : 1 | 0 : 1 | 0.3 : 1 | 0 : 1 |
| Test/Property | | | | | | | | |
| Water resistance (12 hours immersion in distilled water) | Pass (Coatings slightly come-off from the substrate) | Pass (Coatings still be on the substrate) | Pass (Coatings still be on the substrate) | Pass (Coatings still be on the substrate) | Pass (Coatings still be on the substrate) | Fail (Coatings come-off from the substrate 70-80%) | Fail (Coatings come-off from the substrate 70-80%) | Fail (Coatings come-off from the substrate around 80-90%) |

### Summary

The results show that the coating composition of the present invention provides coatings that have superior properties in terms of moisture resistance, water resistance, strength, and durability compared to the comparative coatings tested. Moreover, the coatings provided by the coating compositions of the invention are able to better withstand high temperatures and corrosive conditions. As such, the coatings of the present invention are well-suited to use in environments in which corrosion and slagging are common problems (e.g. in boiler systems etc.) and can help to prevent the undesirable effects of these problems. The coatings of the present invention also possess high emissivity at high temperatures.

## Claims

1. A coating composition, preferably a corrosion-resistant coating composition, and more preferably a corrosion-resistant and high emissivity coating composition, comprising:
(i) a carbide compound selected from tungsten carbide, silicon carbide, titanium carbide, zirconium carbide, hafnium carbide, vanadium carbide, or a mixture thereof;
(ii) a boride compound selected from zirconium diboride, titanium diboride, hafnium diboride, vanadium diboride, or a mixture thereof;
(iii) a nitride compound selected from boron nitride, aluminum nitride, silicon nitride, lithium nitride, sodium nitride, potassium nitride, or a mixture thereof;
(iv) an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) a binder comprising lithium silicate and potassium silicate;
(vi) a fluxing agent comprising an alkali metal feldspar; and
(vii) optionally, media, preferably water,
wherein the weight ratio of lithium silicate to potassium silicate is preferably in the range 0.5 to 6.5 : 1, preferably 1.0 to 3.0 : 1, more preferably 1.2 to 2.5 : 1, and still more preferably 1.4 to 2.0 : 1.

2. A coating composition according to claim 1, comprising:
(i) 0.1 -10 wt%, preferably 1 - 5 wt%, more preferably 2 - 5 wt%, of a carbide compound selected from tungsten carbide, silicon carbide titanium carbide, zirconium carbide, hafnium carbide, vanadium carbide, or a mixture thereof;
(ii) 0.1 - 15 wt%, preferably 1-10 wt%, more preferably 3 - 7 wt%, of a boride compound selected from zirconium diboride, titanium diboride, hafnium diboride, vanadium diboride, or a mixture thereof;
(iii) 0.1 - 15 wt%, preferably 1-10 wt%, more preferably 3 - 7 wt%, of a nitride compound selected from boron nitride, aluminum nitride, silicon nitride, lithium nitride, sodium nitride, potassium nitride, or a mixture thereof;
(iv) 5 - 50 wt%, preferably 20 - 40 wt%, more preferably 30 - 40 wt%, of an oxide compound selected from silicon oxide, aluminum oxide, chromium oxide, titanium dioxide, zirconium oxide, zinc oxide, cerium oxide, cobalt oxide, iron oxide, magnesium oxide, calcium oxide, or a mixture thereof;
(v) 2 - 25 wt%, preferably 5-15 wt%, more preferably 10 - 15 wt%, of a binder comprising lithium silicate and potassium silicate;
(vi) 0.5 -10 wt%, preferably 1 - 6 wt%, more preferably 3-5 wt%, of a fluxing agent comprising an alkali metal feldspar; and
(vii) 25 - 50 wt%, preferably 30 - 40 wt% of water,
wherein wt% are based on the total weight of the coating composition.

3. A coating composition according to claim 1 or claim 2, wherein the weight ratio of lithium silicate to potassium silicate to alkali feldspar is in the range (0.2 to 4) : (0.1 to 3) : 1, preferably (0.3 to 3.5) : (0.2 to 2.5) : 1, more preferably (0.8 to 3.5) : (0.3 to 2.5) : 1, even more preferably (1.2 to 2.2) : (0.7 to 1.2) : 1.

4. A coating composition according to any one of claims 1 to 3, wherein the alkali metal feldspar is potassium feldspar, sodium feldspar, lithium feldspar, rubidium feldspar, cesium feldspar, or a mixture thereof, preferably potassium feldspar, sodium feldspar, or a mixture thereof, preferably potassium feldspar.

5. A coating composition according to any one of claims 1 to 4, wherein the weight ratio of said mixture of binder and fluxing agent to carbide compound, preferably tungsten carbide, is 1.0 to 10.0 : 1, preferably 3.0 to 7.5 : 1, more preferably 4.5 to 7.0 : 1, most preferably 5.0 to 6.5 : 1.

6. A coating composition according to any one of claims 1 to 5, wherein the weight ratio of said mixture of binder and fluxing agent to boride compound, preferably zirconium diboride, is 0.5 to 7.0 : 1, preferably 1.5 to 4.5 : 1, more preferably 2.5 to 4.0 : 1.

7. A coating composition according to any one of claims 1 to 6, wherein the weight ratio of said a mixture of binder and fluxing agent to nitride compound, preferably boron nitride, is 0.5 to 7.0 : 1, preferably 1.5 to 4.5 : 1, more preferably 2.5 to 4.0 : 1.

8. A coating composition according to any one of claims 1 to 7, wherein the weight ratio of said a mixture of binder and fluxing agent to oxide compound is 0.1 to 1.5 : 1, preferably 0.1 to 0.8 : 1, more preferably 0.2 to 0.6 : 1, most preferably 0.4 to 0.55 : 1.

9. A coating composition according to any one of claims 1 to 8, wherein the weight ratio of carbide compound to boride compound to nitride compound is in the range 0.1 to 1.5 : 0.5 to 2 : 1, preferably 0.2 to 0.9 : 0.6 to 1.5 : 1, more preferably 0.4 to 0.7 : 0.8 to 1.2 : 1.

10. A coating composition according to any one of claims 1 to 9, wherein the weight ratio of carbide compound to chromium oxide is in the range 0.1 to 1 : 1, preferably 0.1 to 0.5 : 1, more preferably 0.2 to 0.4 : 1.

11. A coating composition according to any one of claims 1 to 9, wherein the weight ratio of boride compound to chromium oxide is in the range 0.1 to 1, preferably 0.3 to 0.7 : 1, more preferably 0.4 to 0.6 : 1.

12. A coating composition according to any one of claims 1 to 9, wherein the weight ratio of nitride compound to chromium oxide is in the range 0.1 to 1, preferably 0.3 to 0.7 : 1, preferably 0.4 to 0.6 : 1.

13. A method for preparing a coated substrate, comprising the steps of:
(i) providing a substrate; and
(ii) applying a coating composition as defined in any one of claims 1 to 12 onto at least one surface of said substrate.

14. A coated substrate comprising a coating composition as defined in any one of claims 1 to 12.

15. A heating system (e.g. a boiler, fired heater or furnace) comprising a coated substrate according to claim 14.
